# EUROPÄISCHE PATENTSCHRIFT

(11) **EP 1 422 169 B1**
(45) Veröffentlichungstag und Bekanntmachung des Hinweises auf die Patenterteilung: **29.03.2006**
(21) Anmeldenummer: 03026767.8
(22) Anmeldetag: 21.11.2003
(51) Int. Cl.: B65G 1/04

(54) **Lagersystem mit schienengebundenen Fahrzeugen zur Aufnahme und Abgabe von Lagergut**
Warehouse with rail trolleys for storing and retrieving goods
Magasin avec chariots sur rails pour le stockage et déstockage d'articles

(30) Priorität: 22.11.2002 DE 10254647
(43) Veröffentlichungstag der Anmeldung: 26.05.2004
(73) Patentinhaber: Fraunhofer-Gesellschaft zur Förderung der angewandten Forschung e.V., 80686 München (DE)
(72) Erfinder: Schroer, Winfried, Dipl.-Ing., 44581 Castrop-Rauxel (DE)
(74) Vertreter: Gagel, Roland

(56) Entgegenhaltungen:
- DE-A- 3 207 860
- DE-A- 3 805 712
- DE-A- 10 021 694
- PATENT ABSTRACTS OF JAPAN Bd. 016, Nr. 306 (M-1276), 6. Juli 1992 (1992-07-06) & JP 04 085202 A (TOYO KANETSU KK), 18. März 1992 (1992-03-18)
- PATENT ABSTRACTS OF JAPAN Bd. 013, Nr. 223 (M-829), 24. Mai 1989 (1989-05-24) & JP 01 038301 A (TAISEI CORP), 8. Februar 1989 (1989-02-08)

## Beschreibung

### Technisches Anwendungsgebiet

Die vorliegende Erfindung betrifft ein Lager- und Transportsystem gemäβ dem Öberbegriff des Anspruchs 1. Ein solches System ist z.B. aus JP 04 085202 A bekannt.

Die Optimierung des Materialflusses bei der Ein-oder Auslagerung von Gütern in bzw. aus Lagern spielt heutzutage gerade unter Kostenaspekten eine sehr große Rolle. Neben einer möglichst effektiven Gestaltung des Lagersystems an sich kommt hierbei auch der effektiven Gestaltung des Lagers eine erhebliche Bedeutung zu. Sowohl die Räume innerhalb eines Lagers, die zur Aufnahme des Lagerguts bestimmt sind, als auch die Bereiche, die den Fahrweg der Lagerfahrzeuge darstellen, müssen derart kompakt gestaltet sein, dass Toträume innerhalb des Lagers weitgehend vermieden werden.

Die DE-OS 2319058 zeigt ein Verfahren und eine Einrichtung zur Auslagerung von Lagergut aus einseitig offenen Regalen, bei denen ein Regalbediengerät am Boden in den Regalgassen bis an das angepeilte Regalfach fährt, einen Fördermechanismus bis knapp unterhalb der Regalebene des Regalfaches hochfährt und das Lagergut über Friktionsrollen des Fördermechanismus, die unterhalb des Lagergutes angreifen, aus dem Regalfach herauszieht. Dies erfordert jedoch ausreichend breite Regalgassen, um die Manövrierfähigkeit des Regalbediengerätes zu gewährleisten.
Die DE 20007881 U1 befasst sich mit einer Anordnung zum Bedienen eines Produktlagerregals, welches schräge Regalböden aufweist. Auch hier fährt das mobile Regalbediengerät am Boden in der Regalgasse zunächst bis an die gewünschte Regalstelle, um das Lagergut dann mit einem Umlenkende eines Endlosbandes anzuheben und aus dem Regal herauszuziehen.

Zur Verminderung von Toträumen sind Lager bekannt, die über Lastaufnahmemittel mit Fahrwerk zur Bedienung von Behälter-Lägern verfügen, so dass in den Regalgassen keine Regalbediengeräte (RBG) mit Mast- und Hubwerk verfahren, sondern einzelne kleine Wagen, die in der jeweils zu bedienenden Ebene als selbstfahrende Fahrzeuge eingesetzt werden. Mit derartigen Lagersystemen ist es außerdem möglich, Transporte direkt aus dem Lager in einen Produktionsbereich durchzuführen, ohne dass zwischenzeitliche Übergaben des Lagergutes vorgenommen werden.

Derartige Lagersysteme zeichnen sich dadurch aus, dass sie leicht und kompakt gebaut sind und in der Regel einfache Schienenwege als Fahrwege aufweisen. Daher verfügen Lagersysteme mit selbstfahrenden Transportfahrzeugen im Vergleich zu Lagersystemen mit Lagerbediengeräten lediglich über einen geringen Totraumanteil. In diesem Zusammenhang bedeutet wenig Totraum, dass die vertikalen und horizontalen Freiräume zwischen den Behältern, die für die Regalkonstruktion und für das Einfahren des Lastaufnahmemittels benötigt werden, gering sind und dass gleichzeitig die Gassenbreite minimal ist.

Wenn beliebige Lagergüter mit unterschiedlicher Grundfläche oder Höhen die weder Griffleisten noch sonstige spezielle Elemente, an denen sich das Lastaufnahmemittel ankoppeln kann, aufweisen, aufgenommen werden sollen, ist das Ergreifen des Lagerguts an der Unterseite die einzige praxistaugliche Lösung zur Aufnahme der Lagergüter. Derartige Lastaufnahmemittel benötigen immer einen vertikalen Freiraum zwischen den Behältern, um die Unterseite des Lagergutes erreichen zu können. Hierzu sind die Lastaufnahmemittel mit entsprechenden teleskopartig ausgeführten oder reib- oder formschlüssigen Greifern ausgerüstet.

So wird etwa in W. Grafe; "Einsatzschwerpunkte für die neuesten Entwicklungen in der Materialflusstechnik" in: Hebezeugen und Fördermittel, Berlin 32 (1992), Nr. 9, Seite 408-411 ein autonomes Lagerfahrzeug (ALF) beschrieben. Hierbei handelt es sich um ein Satellitenfahrzeug, das mit Teleskopgabeln ausgerüstet ist und das in einzelnen Ebenen eines Regalzeilenlagers verfahrbar ist. Mit Hilfe der Teleskopgabeln können Paletten seitlich von den Regalfächern aufgenommen oder in sie abgegeben werden. Um das Versetzen des autonomen Lagerfahrzeuges von einer Regalebene zur nächsten zu realisieren, wird zusätzlich ein Vertikalförderer eingesetzt. Weiterhin kann das ALF mit Hilfe eines Trägerfahrzeuges auch zwischen verschiedenen Regalgängen versetzt werden.

Nachteilig an dem in der vorgenannten Druckschrift beschriebenen Lagersystem mit autonomen Lagerfahrzeugen ist, dass das Fahrzeug stets Teleskopgabeln mit sich führt, die zur Aufnahme des Lagergutes dienen. Damit sich das autonome Lagerfahrzeug in den einzelnen Ebenen des Regalzeilenlagers frei bewegen kann, werden die Transportgabeln nach Beendigung des Aufnahmevorgangs des Lagerguts wieder unter das Lagerfahrzeug eingefahren. Das entsprechende Lagerfahrzeuge verfügt daher über einen entsprechenden Raum unterhalb der eigentlichen Transportplattform und benötigt eine gewisse Höhe oberhalb des Lagerguts, damit es von seiner Auflagefläche abgehoben werden kann, was letztendlich die Gesamtbauhöhe des Regals beeinflusst. So geht in jeder Regalebene des Lagers die Höhe für eine Einlagerung von Lagergut verloren, die der Höhe der Teleskopgabeln und ihrer Hubbewegung entspricht, zuzüglich der Höhe der Fahrschiene des autonomen Lagerfahrzeuges.
Ein weiterer Nachteil des in der vorgenannten Druckschrift beschriebenen Systems besteht darin, dass bevor das Lagerfahrzeug nach einem Lade- oder Entladevorgang seine Fahrt fortsetzen kann, die Teleskopgabel vollständig eingefahren werden muss. Über die gesamte Betriebszeit eines Lagers hat dies einen erheblichen Zeitaufwand zur Folge.

Die DE 3207860 Al beschreibt eine Fördereinrichtung für eine Lagerhausanlage, bei der das Lagerfahrzeug einen Unterfahrwagen mit zwei unabhängig voneinander betätigbaren Hubplattformen aufweist. Der Unterfahrwagen wird in Laufschienen unterhalb des jeweiligen Regalfaches eingeschoben, um die Lagergüter mit Hilfe der Hubplattformen aufzunehmen. Auch dies erfordert jedoch ausreichend Raum zwischen den Regalebenen und einen entsprechenden Zeitaufwand für den Lade- bzw. Entladevorgang.

Ausgehend von dem bekannten Stand der Technik liegt der Erfindung daher die Aufgabe zu Grunde, ein Lagersystem mit einem Bediengerät anzugeben, dessen Aufbau derart kompakt ist, dass die Entstehung von Toträumen weitgehend minimiert wird und eine möglichst kurze Spielzeit, innerhalb der Lagergüter von einem Bediengerät auf- bzw. abgegeben werden, realisiert wird. Darüber hinaus soll sich das Lagersystem durch einen geringen Platzbedarf, geringes Gewicht sowie einen minimalen Bauaufwand auszeichnen.

### Darstellung der Erfindung

Die Aufgabe wird mit dem Lager- und Transportsystem gemäß Patentanspruch 1 gelöst. Vorteilhafte Ausgestaltungen dieses Lager- und Transportsystems sind Gegenstand der Unteransprüche.

Das vorliegende Lager- und Transportsystem weist eine beliebige Anzahl Regalzeilen zur Aufnahme von Lagergut in mehreren Regalebenen, sowie eine Vielzahl von Schienenwegen auf, die auf Höhe der einzelnen Regalebenen zwischen den Regalzeilen angeordnet sind. Das Transportsystem besteht aus mehreren schienengebundenen Fahrzeugen mit Lastaufnahmemitteln zur Aufnahme und Abgabe des Lagerguts sowie Fahrwerken mit Antrieb. Weiterhin sind Mittel zur Umsetzung der Fahrzeuge zwischen den Regalebenen vorgesehen. Erfindungsgemäß sind die Schienenwege und die Lastaufnahmemittel zur Aufnahme und Abgabe des Lagerguts derart angeordnet , dass während sich das schienengebundene Fahrzeug zwischen den Regalzeilen in einer Regalebene befindet, die Lastaufnahmemittel stets wenigstens teilweise über eine, dem Lagergut zugewandte Außenkante des schienengebundenen Fahrzeugs hinausragen und unterhalb einer von einer Unterseite des Lagerguts, das sich in der gleichen Regalebene wie das schienengebundene Fahrzeug befindet, aufgespannten Fläche angeordnet sind.

Das Lager- und Transportsystem besteht somit aus vielen kompakten autonomen Fahrzeugen, die schienengebunden, vorzugsweise im Lagerbereich verfahrbar sind. Während die Schienen im gesamten Betrieb flurfrei oder aufgeständert angebracht werden, sind sie gleichzeitig innerhalb der Regale derart angeordnet, dass wenigstens ein Teil der Lastaufnahmemittel während der Fortbewegung des schienengebundenen Fahrzeugs stets außerhalb der Außenbegrenzungen des schienengebundenen Fahrzeugs verbleibt. Auch nachdem das schienengebundene Fahrzeug ein Lagergut aufgenommen bzw. abgegeben hat, werden die Lastaufnahmemittel nicht vollständig in eine Position innerhalb der Außenbegrenzungen des schienengebundenen Fahrzeugs überführt, so dass eine niedrige Bauhöhe der schienengebundenen Fahrzeuge Gewähr leistet wird. Da letztendlich auch die Bauhöhe der Lagerfahrzeuge ausschlaggebend für die Größe des effektiv nutzbaren Lagerbereiches ist, wird auf diese Weise der Totraum zwischen den einzelnen Regalebenen minimiert.

Erfindungsgemäß weisen die Lastaufnahmemittel wenigstens eine Übernahmeeinheit auf, die um eine parallel zum Schienenweg verlaufende Achse derart dreh- bzw. schwenkbar gelagert ist, dass zumindest eine Teilfläche der Übernahmeeinheit, in eine Position überführbar ist, die wenigstens einen Punkt aufweist, der oberhalb der von einer Unterseite des Lagerguts aufgespannten Fläche liegt. Bei Betätigung der Lastaufnahmemittel greifen diese somit an der Unterseite des Lagerguts an, so dass das Lagergut über die Übernahmeeinheit auf z.B. eine Transporteinheit gefördert wird. Das Lagergut wird vozzugweise derart auf dem Lager- und Transportfahrzeug positioniert, dass die Außenkanten des Lagergutes während des Transportes nicht über die Seitenkanten des schienengebundenen Transportfahrzeuges hinausragen.

Erfindungsgemäß steht die Übernahmeeinheit mit Antriebsriemen derart in Wirkverbindung, dass der Antriebsriemen wenigstens teilweise unterhalb des Schienenweges, auf dem sich das schienengebundene Fahrzeug befindet, angeordnet ist

Vorzugsweise weisen die Lastaufnahmemittel zur Aufnahme und Abgabe des Lagerguts wenigstens einen Riementrieb auf, der zumindest teilweise eine Transportplattform bildet, auf der das Lagergut während des Transports mit dem schienengebundenen Fahrzeug ruht. Der Riemen ist senkrecht zur Fortbewegungsrichtung derart bewegbar, dass zumindest von einer Seite des Lager- und Transportfahrzeugs Lagergüter auf die Transportplattform förderbar sind.

Bei derartigen Lagergütern kann es sich um Behälter verschiedener Größen handeln, die mit Hilfe des erfindungsgemäßen Lager- und Transportsystems beförderbar sind. Vorzugsweise sind hierzu die Lastaufnahmemittel zur Aufnahme und Abgabe des Lagergutes zwischen zwei Achsen angeordnet, an denen die der Fortbewegung des schienengebundenen Fahrzeugs dienende Räder befestigt sind. Auf diese Weise wird sichergestellt, dass die Lastaufnahmemittel nicht vollständig oberhalb der Fahrzeugachsen angeordnet sind und somit die Bauhöhe des Lager- und Transportfahrzeugs verringert wird.

In einer besonderen Ausführungsform des erfindungsgemäßen Lager- und Transportsystems weisen die Lastaufnahmemittel wenigstens zwei Riementriebe sowie zumindest ein Koppelelement auf, mit denen die zu bewegenden Lagergüter auf das Fahrzeug bewegt werden. Die Lastaufnahmemittel teilen sich in jeweils wenigstens eine Übernahme- und eine Transporteinheit auf, die über das Koppelelement miteinander in Wirkverbindung stehen. Sobald das schienengebundene Transportfahrzeug in der richtigen Position vor dem aufzunehmenden Lagergut positioniert ist, wird zumindest ein Riementrieb mit Hilfe einer Antriebseinheit in Bewegung versetzt, wobei das Koppelelement dafür Sorge trägt, dass die nicht direkt angetriebenen Riemen ebenfalls in Bewegung versetzt werden.

Vorzugsweise weist das Koppelelement wenigstens eine Welle und zumindest einen Antriebsriemen auf, durch die die Übernahmeeinheit mit der Transporteinheit miteinander in Wirkverbindung bringbar sind. Während das schienengebundene Fahrzeug zwischen den Regalzeilen in einer Regalebene bewegt wird, ragt die Übernahmeeinheit stets wenigstens teilweise über die Außenkanten des Fahrzeugs hinaus, so dass die Übernahmeeinheit in kürzester Zeit mit der Unterseite des Lagerguts in Berührung bringbar ist, bzw. in die Position überführbar ist, die ein Abstellen eines Lagerguts in das Regallager ermöglicht.

Um den Riemen des Koppelelementes in Bewegung setzen zu können, steht das Koppelelement mit einer Antriebseinheit in Wirkverbindung. Bei einer derartigen Antriebseinheit handelt es sich bevorzugt um einen Motor, der sowohl elektrisch als auch mit einem flüssigen oder gasförmigen Treibstoff versorgbar ist. Vorzugsweise sind in dem erfindungsgemäßen Lager- und Transportfahrzeug Elektromotoren als Antriebseinheiten vorgesehen.

In einer besonderen Ausführungsform des erfindungsgemäßen Lager- und Transportsystems sind die beiden Fahrschienen elektrisch isoliert aufgehängt und derart mit einer elektrischen Spannung beaufschlagbar, dass die Fahrzeuge, insbesondere die Elektromotoren sowie die in die Fahrzeuge integrierten Mess-, Steuer-und Regelungseinheiten, über Kontakte mit elektrischer Energie versorgbar sind.

In einer weiteren, besonders bevorzugten Ausführungsform weisen die Lastaufnahmemittel zwei beidseitig des schienengebundenen Fahrzeugs angeordnete Übernahmeeinheiten sowie eine zwischen den Achsen des schienengebundenen Fahrzeugs angeordnete Transporteinheit auf. Sowohl die Transporteinheit als auch die zwei beidseitig des schienengebundenen Fahrzeugs angeordneten Übernahmeeinheiten verfügen über jeweils wenigstens einen, mit dem Lagergut zumindest teilweise in Berührung bringbaren Riementrieb, der über wenigstens ein Koppelelement mit zumindest einer gemeinsamen Antriebseinheit in Wirkverbindung bringbar sind. Da die Übernahmeeinheiten stets wenigstens teilweise über die beiden gegenüberliegenden, dem Lagergut zugewandten Außenkanten des schienengebundenen Fahrzeuges hinausragen, wird zumindest teilweise die sonst für eine Lagergutaufnahme erforderliche Vorschubbewegung überflüssig. Durch diese Maßnahme entfällt sowohl Platzbedarf, Gewicht und Bauaufwand für die sonst hierfür nötige Bewegungsachse des Lastaufnahmemittels als auch die benötigte Zeit zum Betätigen dieser Bewegungsachse.

Ein schienengebundenes Fahrzeug, das über zwei beidseitig des Fahrzeugs angeordnete Lastaufnahmeeinheiten verfügt, ist in der Lage sog. Doppelspiele abzuarbeiten. Mit jeder Einlagerung wird dann eine Auslagerung kombiniert, das Fahrzeug nimmt also nach einer Einlagerung auf dem Rückweg zur Vorzone einen auszulagernden Behälter mit und spart auf diese Weise Fahrzeit. Am Übergabepunkt zur Vorzone muss dann ein Behälter abgegeben und ein neuer aufgenommen werden. Das Lastaufnahmemittel gemäß der vorgenannten speziellen Ausführungsform der Erfindung ist in der Lage, an einer Anfahrposition zwei Übergaben simultan und damit in sehr kurzer Zeit auszuführen, indem beide an der Übernahmeeinheit vorgesehenen Reibriemeintriebe gleichzeitig an das Lagergut gedrückt werden. Während auf der einen Seite des schienengebundenen Fahrzeugs ein Lagergut abgegeben wird, wird auf der gegenüberliegenden Seite ein Lagergut auf das Fahrzeug befördert.

In einer weiteren bevorzugten Ausführungsform sieht das erfindungsgemäße Lager- und Transportsystem ein Absturzsicherungssystem für die schienengebundenen Fahrzeuge vor, das über wenigstens ein Sensorsystem verfügt, mit dem die Schienenwege, die schienengebundenen Fahrzeuge und/oder an den Schienenwegen befestigte Markierungen detektierbar sind. Ein automatisch im Regal fahrendes Gerät wird somit sicher daran gehindert, bei Fehlfunktionen der Steuerung über ein offenes Schienenende hinauszufahren bzw. abzustürzen. Da ein Regalsystem eine Vielzahl offener Schienenenden aufweist, ist es zum einen wichtig, dass das System zur Absturzsicherung einfach aufgebaut ist und zum anderen, dass am Regal wenig Installation benötigt wird. Darüber hinaus wird in einem erfindungsgemäßen Lager- und Transportsystem, das zusätzlich über das nachfolgend beschriebene Absturzsicherungssystem verfügt, vermieden, dass unzulässige Kräfte in das Regal übertragen werden. Vorzugsweise verfügt das Absturzsicherungssystem über wenigstens ein Überwachungssystem, mit dem eine Position und/oder eine Fahrtrichtung der schienengebundenen Fahrzeuge auf dem Schienenwege erfassbar ist. Unter Zugrundelegung der durch das Überwachungssystem erfassten Position werden die schienengebundenen Fahrzeuge an den Enden der Schienenwege zwangsläufig stillgesetzt.

Mit Hilfe eines weiteren Sensorsystems ist dieses wenigstens eine Überwachungssystem deaktivierbar. Auf diese Weise wird das Überfahren von Schienenlücken realisiert. Das Überfahren von Schienenlücken tritt vor allem bei der Überfahrt des schienengebundenen Fahrzeugs aus einer Regalzeile auf ein Umsetzgerät, das vorzugsweise zur Beförderung des schienengebundenen Fahrzeugs in eine andere Regalzeile eingesetzt wird, auf. Als Sensorsystems besonders geeignet ist hier der Einsatz einer Einweg-Lichtschranke, deren Sender vom Umsetzgerät aus ein Lichtsignal aussendet, das von einem am Fahrzeug montierten Empfänger immer dann erfasst wird, wenn das Umsetzgerät richtig vor dem Fahrkanal positioniert ist Das Signal des Empfängers setzt dann das Überwachungssystem außer Kraft. Auf diese Weise ist anschließend das Überfahren von Schienenlücken möglich.

Vorzugsweise weist das Absturzsicherungssystem wenigstens zwei voneinander unabhängig arbeitende Sensorsysteme auf. In einer besonderen Ausführungsform verfügt wenigsten ein Sensorsystem über eine, an den schienengebundenen Fahrzeugen angeordnete Sensoreinheit, mit der unter Berücksichtigung einer auf wenigstens einem Schienenweg aufgebrachten Beschichtung und/oder Markierung Fortbewegungsdaten der Fahrzeuge ermittelbar und die Antriebseinheit unter Zugrundelegung der Fortbewegungsdaten beeinflussbar ist.

Vorzugsweise ist an jedem offenen Fahrstreckenende ein Streifen reflektierender Folie als Nockenbahn unten an der Schiene angebracht, die von einem Sensor abgetastet wird. Sobald diese Nockenbahn detektiert wird, wird die Steuerung des Antriebsmotors, vorzugsweise durch Verwendung eines Vorwiderstandes zwischen Drehzahlsteller und Motor, beeinflusst. Die Fahrgeschwindigkeit wird damit in diesem Bereich auf einem geringen Wert herabgesetzt. Die Nockenbahn ist von der Länge her derart bemessen, dass das Fahrzeug in jedem Fall vor Erreichen des Schienenendes auf die vorgegebene Geschwindigkeit heruntergebremst ist.

In einer weiteren besonderen Ausführungsform des erfindungsgemäßen Lager- und Transportsystems verfügt das Sensorsystem über wenigstens eine, an den schienengebundenen Fahrzeugen angeordnete Sensoreinheit, mit der durch ein induktives Messverfahren Fortbewegungsdaten der Fahrzeuge ermittelbar und die Antriebseinheit unter Zugrundelegung der Fortbewegungsdaten beeinflussbar ist. Vorzugsweise ist an den äußersten Enden des Fahrzeugs je ein induktiver Sensor derart befestigt, dass die, Schiene ständig durch diese Sensor abtastbar ist. Eine ganz spezielle Ausführungsform sieht vor, dass die zwei Sensorsystem derart die Steuerung beeinflussen, dass sobald eines der beiden Sensorsysteme kein Signal liefert, mit einem weiteren Relais der Motor ganz vom Drehzahlsteller getrennt und gleichzeitig ein Bremswiderstand parallel geschaltet wird.

Vorzugsweise ist zur Sicherheit zusätzlich ein mechanisches System vorgesehen, das über Bremskufen, die auf der Fahrschiene aufsetzbar sind, verfügt.
Sobald bspw. ein Rad im Störungsfall aus der Schiene herausfährt, wird das schienengebundene Fahrzeug leicht geneigt, so dass eine Bremskufe auf den Schienen aufsetzt.

In einer ganz besonders bevorzugten Ausführungsform des erfindungsgemäßen Lager- und Transportsystems, ist ein Absturzsicherungssystem vorgesehen, das sowohl über zwei an den schienengebundenen Fahrzeugen befestigte Sensorsysteme, eine Lichtschrankeneinheit, die die Ausrichtung der schienengebundenen Fahrzeuge überwacht, als auch ein mechanisches Bremssystem verfügt. Eine gemeinsame Steuerung führt alle von den entsprechenden Systemen ermittelten Fortbewegungsdaten derart zusammen, dass ein Absturz eines schienengebundenen Fahrzeugs sicher vermeidbar ist.

Das erfindungsgemäße Lager- und Transportsystem soll im Weiteren unter Bezugnahme auf die im Folgenden beschriebenen Figuren näher erläutert werden.

### Kurze Beschreibung der Erfindung

Die Erfindung wird nachstehend ohne Beschrankung des allgemeinen Erfindungsgedankens anhand von Ausführungsbeispielen unter Bezugnahme auf die Zeichnungen exemplarisch beschrieben. Es zeigen:
- Fig. 1a: Anordnung des schienengebundenen Fahrzeugs in der Regalebene;
- Fig. 1b: Aufnahme eines Lagerguts durch die Übergabeeinheit;
- Fig. 2: Draufsicht auf das schienengebundene Fahrzeug;
- Fig. 3: Seitenansicht des schienengebundenen Fahrzeugs; und
- Fig. 4: Absturzsicherung.

### Wege zur Ausführung der Erfindung

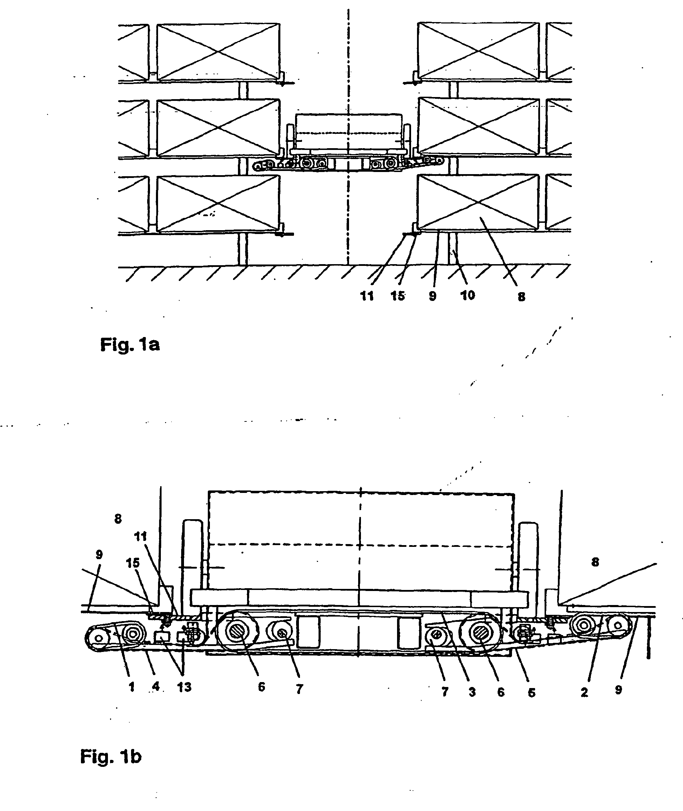

In Figur 1a ist ein schienengebundenes Fahrzeug dargestellt, das innerhalb einer Regalzeile einer Regalebene verfahrbar ist. In Figur 1b ist das schienengebundene Fahrzeug detailliert dargestellt. Das Lastaufnahmemittel besteht aus drei Riementrieben 1, 2, 3, die mit einem Belag mit hohem Reibwert beschichtet sind und die durch Übertragungsriemen 4, 5 derart miteinander gekoppelt sind, dass alle Riemen von einem Antrieb gemeinsam angetrieben werden. Die Lastaufnahmemittel setzen sich aus den Übernahmeeinheiten 1 und 2 sowie der Transporteinheit 3 zusammen. Die beiden Übernahmeeinheiten 1 und 2, die ebenfalls als Reibriementriebe ausgeführt sind, sind derart aufgehängt, dass diese um die Achsen 6 schwenkbar sind. Der Antrieb für die Schwenkbewegung wird durch einen Exzenter 7 realisiert.

Die Figuren 1a und 1b zeigen einen Schnitt durch das schienengebundene Fahrzeug senkrecht zur Fortbewegungsrichtung. Während in der linken Hälfte die Übernahmeeinheit in Ruhestellung dargestellt ist, ist in der rechten Hälfte die Übernahmeeinheit 2 hochgeschwenkt und hat den Lager-Behälter 8 leicht von der Winkelauflage 9 des Regals angehoben. Durch Betätigen der Reibriemenantriebe der Übernahmeeinheit 2 und auch der Transporteinheit 3 wird der Behälter aufgenommen bzw. abgegeben. Im Gegensatz zu den aus dem Stand der Technik bekannten, mit Regalbediengeräten bedienten Regalen sind die Übernahmemittel 1, 2 auch während der Fährt des Bediehfahrzeugs im auskragenden Zustand zu belassen, da das Bedienfahrzeug innerhalb der Regalzeile keine Vertikalbewegung macht. Voraussetzung hierfür ist, dass die Steher 10 des Regals zurückversetzt sind um den nötigen Freiraum für die durchfahrende Übernahmeeinheit zu schaffen.

Auf diese Weise kann die sonst erforderliche Vorschubbewegung entfallen. Insbesondere werden Platzbedarf, Gewicht und Bauaufwand minimiert und der Zeitaufwand zum Betätigen der Bewegungsachse verringert. Es ergibt sich somit ein Lastaufnahmemittel, das prinzipbedingt mit der kürzest möglichen Spielzeit arbeitet.

Ein weiterer Spielzeitvorteil ist dann gegeben, wenn das Gerät so eingesetzt wird, dass es Doppelspiele abarbeitet. Mit jeder Einlagerung wird dann eine Auslagerung kombiniert, das Gerät nimmt also nach einer Einlagerung auf dem Rückweg zur Vorzone einen auszulagernden Behälter mit und spart auf diese Weist Fahrzeit. Am Übergabepunkt zur Vorzone muss dann ein Behälter abgegeben und ein neuer aufgenommen werden. Das hier beschriebene Lastaufnahmemittel bietet in diesem Fall die Möglichkeit diese zwei Übergaben simultan auszuführen, indem beide äußeren Reibriementriebe gleichzeitig hochgedrückt werden. Dies ist ebenfalls prinzipbedingt die schnellste Möglichkeit eine solche Doppelübergabe an einer Anfahrposition durchzuführen.

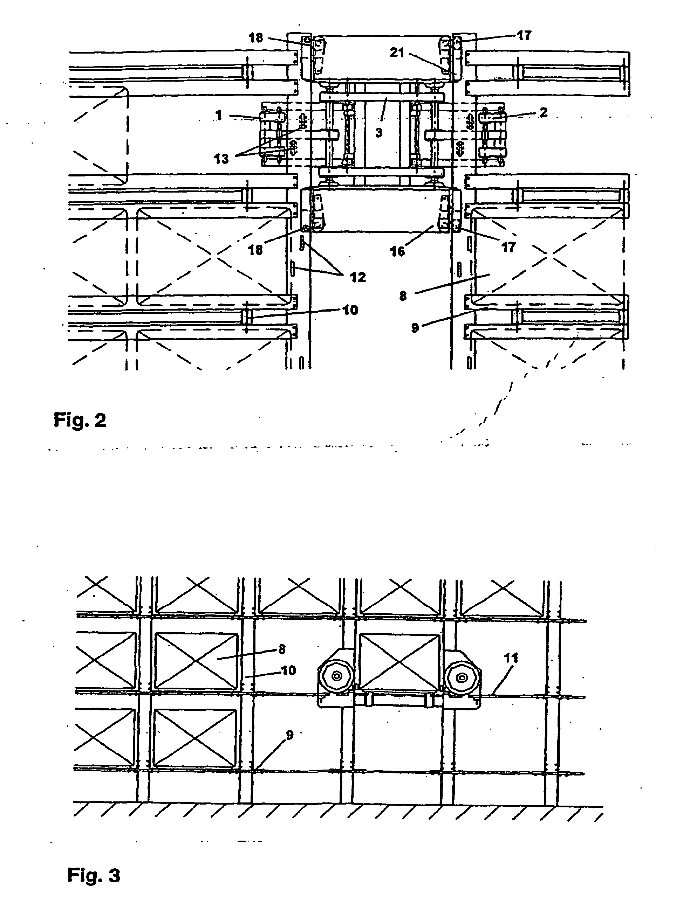

In Fig. 2 ist das in einer Regalzeile befindliche schienengebundene Fahrzeug in einer Draufsicht dargestellt. Die Schiene 11 auf der das Bedienfahrzeug fährt, ist ein horizontal liegendes Flachstahlprofil, das an den spitzen der Winkelauflagen 9 befestigt ist. Die vorderen Riementriebe der Übernahmeeinheiten 1,2 sind derart angeordnet, dass sie neben der Schiene 11 liegen und deshalb die gesamte Bauhöhe dieser Anordnung nicht höher ist als bei Regalbediengerät-gestützten Lastaufnahmemitteln, die an der Unterseite des Lagerbehälters angreifen.

Darüber hinaus ist die Fahrschiene mit Langlöchern 12 versehen, die vom Fahrzeug aus mit je einem Sensor 13 abgetastet werden und mehrere Funktionen erfüllen. Während der Fahrbewegung dienen sie zur Erkennung der Grob- und der Feinposition, im Stillstand wird mit den gleichen Sensoren die Bewegung des Lastaufnahmemittels gesteuert und ein möglicher Lastüberstand überwacht.

Die Räder des schienengebundenen Fahrzeugs laufen oben auf den Schienen und sind, in Fahrtrichtung gesehen, vor und hinter dem aufzunehmenden Behalter angeordnet. Auf diese Weise wird eine besondere Laufruhe Gewähr leistet und gleichzeitig sicher gestellt, dass Schienenlücken auch mit einem zweiachsigen Fahrwerk sicher überwunden werden können. Des Weiteren sind die beiden Fahrschienen mit elektrisch isolierenden Zwischenlagen 15 an den Winkelauflagen 9 befestigt und an eine Stromversorgung angeschlossen. Über die isoliert gelagerte Seitenführung 16 ist das schienengebundene Fahrzeug mit einer Stromversorgung verbunden.

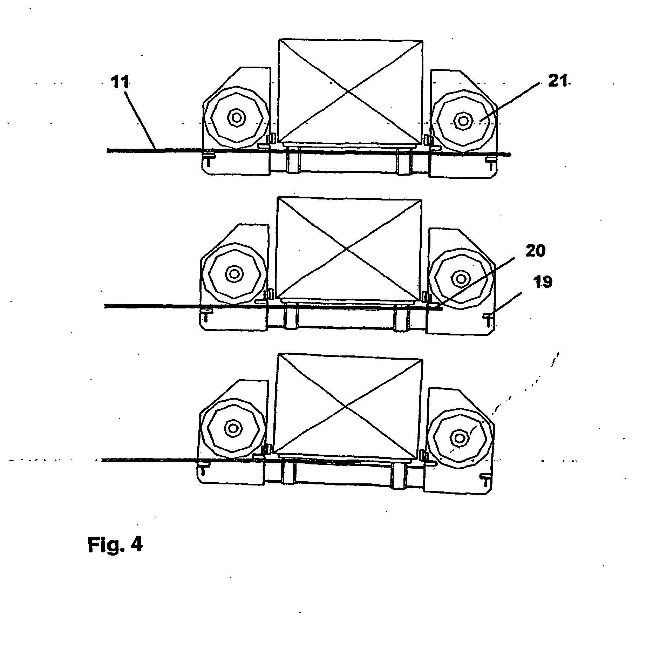

Figur 3 zeigt eine Seitensicht eines erfindungsgemäßen Lager- und Transportsystems mit einem schienengebundenen Fahrzeug, das ein Lagergut aufgenommen hat. Sowohl die Steher 10 als auch die Winkelauflagen 9 sind innerhalb des Regallagers derart angeordnet, dass das schienengebundenen Fahrzeug innerhalb der Regalzeile verfahrbar ist, ohne dass die Übernahmeeinheiten eingefahren werden müssen. Der als Lagerraum zur Verfügung stehende Bereich wird effektiv genutzt, da sich die Schiene 11, die Übernahmeeinheiten und auch die Transporteinheit im gleichen (vertikalen) Totraum befinden.

In Figur 4 ist eine Seitenansicht des Fahrzeugs mit einem Absturzsicherungssystem dargestellt. Mit diesem System zur Absturzsicherung wird ein automatisch im Regal fahrendes, schienengebundenes Fahrzeug sicher daran gehindert, bei Fehlfunktionen der Steuerung über ein offenes Schienenende hinauszufahren bzw. abzustürzen, wenn sich kein weiteres Schienenstück, z. B. auf einem Umsetzgerät oder auf einer Weiche, anschließt. Da ein Regalsystem eine Vielzahl offener Schienenenden aufweist, ist es wichtig, dass das System zur Absturzsicherung einfach aufgebaut ist und insbesondere am Regal wenig Installation benötigt wird. Darüber hinaus dürfen keine unzulässigen Kräfte auf das Regal übertragen werden.

Bei dem dargestellten System wird vollkommen auf mechanische Puffer und Anschläge verzichtet. An jedem offenen Fahrstreckenende ist ein Streifen reflektierende Folie als Nockenbahn unten an der Schiene angebracht, die von einem Sensor 17 abgetastet wird. Sobald die Nockenbahn von dem Sensor 17 detektiert wird, wird mit Hilfe eines Relais ein Vorwiderstand zwischen einem Drehzahlsteller und dem Antriebsmotor geschaltet. Die Fahrgeschwindigkeit wird damit in diesem Bereich auf einen geringen Wert begrenzt. Die Nockenbahn wird in einer Länge ausgeführt, die es ermöglicht, dass das Fahrzeug in jedem Fall vor Erreichen des Schienenendes auf diese vorgegebenen Geschwindigkeit heruntergebremst ist.

Zusätzlich zu dem Nockenbahn-Sensor tastet an den äußersten Enden des Fahrzeugs je ein induktiver Sensor 18 ständig die Schiene ab. Sobald einer der beiden induktiven Sensoren kein Signal liefert, weil er bspw. am Regalende ins Leere tastet, wird mit einem zweiten Relais der Motor ganz vom Drehzahlsteller getrennt und gleichzeitig ein Bremswiderstand parallel geschaltet. Das Fahrzeug kommt somit zum stehen, bevor das vorderste Rad das Schienenende überfahren hat.

Um die Sicherheit des Absturzsicherungssystems weiter zu erhöhen, ist ein weiteres, mechanisches System zur Bremsung der schienengebundenen Fahrzeuge vorgesehen. Neben den Rädern befinden sich je zwei Bremskufen 19 und 20, die vom Fahrzeug aus oberhalb bzw. unterhalb mit geringem Abstand in den Bereich der Schiene hineinragen. Sobald das vordere Rad 21 im, Störungsfall aus der Schiene herausfährt, setzt die dahinter liegende innere Kufe 20 auf der Schiene auf und bremst das Fahrzeug. Die Schleichfahrtgeschwindigkeit wird derart bemessen, dass das Fahrzeug in jedem Fall zum Stehen kommt, bevor die Bremskufe über das Schienenende hinausgerutscht ist. Sollte auf ungünstiger Reibungsverhältnisse die Bremskufe trotzdem über das Schienenende hinausrutschen, greifen die hinteren beiden Kufen und das Fahrzeug wird derart verkantet, dass es nicht abstürzen kann.

Um im nicht-Störungsfall ein Überfahren von Schienenmitteln zu ermöglichen, ist weiterhin eine Einweg-Lichtschranke vorgesehen. Der Sender dieser Einweg-Lichtschranke strahlt vom Umsetzgerät aus und der Strahl wird von einem am schienengebundenen Fahrzeug befestigten Empfänger erfasst sobald das Umsetzgerät richtig vor dem Fahrkanal positioniert ist, und setzt damit das Signal des induktiven Kanalende-Sensors außer Kraft.

### Bezugszeichenliste

- 1: linke Übernahmeeinheit
- 2: rechte Übernahmeeinheit
- 3: Transporteinheit
- 4: linker Übertragungsriemen
- 5: rechter Übertragungsriemen
- 6: Achse
- 7: Exzenter
- 8: Lagergut
- 9: Winkelauflage
- 10: Steher
- 11: Fahrschiene
- 12: Langloch
- 13: Sensor
- 15: isolierende Zwischenlage
- 16: Seitenführung
- 17: optischer Sensor
- 18: induktiver Sensor
- 19: äußere Bremskufe
- 20: innere Bremskufe

## Patentansprüche

1. Lager- und Transportsystem mit
- einer beliebigen Anzahl Regalzeilen zur Aufnahme von Lagergut (8) in mehreren Regalebenen,
- einer Vielzahl von Schienenwegen (11), die auf Höhe der einzelnen Regalebenen zwischen den Regalzeilen angeordnet sind,
- mehreren schienengebundenen Fahrzeugen mit Lastaufnahmemitteln (1-5) zur Aufnahme und Abgabe des Lagerguts (8) sowie einem Fahrwerk mit Antrieb; und
- Mitteln zur Umsetzung der Fahrzeuge zwischen den Regalebenen,
wobei die Schienenwege (11) und die Lastaufnahmemittel (1-5) zur Aufnahme und Abgabe des Lagerguts (8) derart angeordnet sind, dass während sich das schienengebundene Fahrzeug zwischen den Regalzeilen in einer Regalebene befindet, die Lastaufnahmemittel (1-5) stets wenigstens teilweise über eine, dem Lagergut (8) zugewandte Außenkante des schienengebundenen Fahrzeugs hinausragen und unterhalb einer von einer Unterseite des Lagerguts (8), das sich in der gleichen Regalebene wie das schienengebundene Fahrzeug befindet, aufgespannten Fläche angeordnet sind, wobei <> die Lastaufnahmemittel (1- <(1)> 5) wenigstens eine Übernahmeeinheit (1, 2) aufweisen, die stets wenigstens teilweise über die dem Lagergut (8) zugewandte Außenkante des schienengebundenen Fahrzeugs hinausragt, **dadurch gekennzeichnet, dass** die wenigstens eine Übernahmeeinheit (1,2) um eine parallel zum Schienenweg (11) verlaufende Achse (6) derart dreh-bzw. schwenkbar gelagert ist, dass zumindest eine Teilfläche der Übernahmeeinheit (1, 2) in eine Position überführbar ist, die wenigstens einen Punkt aufweist, der oberhalb der von einer Unterseite des Lagerguts (8) aufgespannten Fläche liegt, wobei die wengstens eine Übernahmeeinheit (1,2) mit einem Antriebsriemen (4,5) derart in Winkvertindung steht, dass der Antriebsriemen (4,5) wenigstens teilweise unterhalb des Schienenweges, auf dem sich das schienengebundene Fahrzeug befindet, angeordnet ist.

2. Lager- und Transportsystem nach Anspruch 1, **dadurch gekennzeichnet, dass** die Lastaufnahmemittel (1-5) wenigstens einen Riementrieb aufweisen, der zumindest teilweise eine Transportplattform bildet und mit dem das Lagergut (8) wenigstens teilweise in Berührung bringbar ist.

3. Lager- und Transportsystem nach Anspruch 2, **dadurch gekennzeichnet, dass** der wenigstens eine Riementrieb eine dem Lagergut (8) zugewandte Seite aufweist, deren Oberfläche über einen hohen Reibwert verfügt.

4. Lager- und Transportsystem nach einem der Ansprüche 1 bis 3,
**dadurch gekennzeichnet, dass** die Lastaufnahmemittel (1-5) zwischen zwei Achsen angeordnet sind, die der Fortbewegung des schienengebundenen Fahrzeugs dienende Räder aufweisen.

5. Lager- und Transportsystem nach einem der Ansprüche 1 bis 4,
**dadurch gekennzeichnet, dass** die Lastaufnahmemittel (1-5) wenigstens zwei Riementriebe sowie zumindest ein Koppelelement aufweisen und die wenigstens zwei Riementriebe über das zumindest eine Koppelelement in Wirkverbindung bringbar sind.

6. Lager- und Transportsystem nach Anspruch 5, **dadurch gekennzeichnet, dass** das zumindest eine Koppelelement wenigstens eine Welle und wenigstens einen Antriebsriemen (4,5) aufweist.

7. Lager- und Transportsystem nach Anspruch 5 oder 6,
**dadurch gekennzeichnet, dass** das Koppelelement mit einer Antriebseinheit in Wirkverbindung steht.

8. Lager- und Transportsystem nach einem der Ansprüche 1 bis 7,
**dadurch gekennzeichnet, dass** die Lastaufnahmemittel (1-5) zwei beidseitig des schienengebundenen Fahrzeugs angeordnete Übernahmeeinheiten (1, 2) sowie eine zwischen den Achsen des schienengebundenen Fahrzeugs angeordnete Transporteinheit (3) aufweisen, die jeweils über wenigstens einen, mit dem Lagergut zumindest teilweise in Berührung bringbaren Riementrieb verfügen und dass die Riementriebe über wenigstens ein Koppelelement mit zumindest einer gemeinsamen Antriebseinheit in Wirkverbindung stehen.

9. Lager- und Transportsystem nach einem der Ansprüche 1 bis 8,
**dadurch gekennzeichnet, dass** die schienengebundenen Fahrzeuge über die Schienenwege (11) mit elektrischer Energie versorgbar sind.

## Claims

1. Storage and conveyor system with
- any number of shelf lines for receiving stored goods (8) at several shelf levels,
- a large number of rail tracks (11) which are arranged at the height of the individual shelf levels between the shelf lines,
- several track-bound vehicles with load receiving means (1-5) for receiving and depositing the stored goods (18), and a travelling gear with drive;
- means for transferring the vehicles between the shelf levels,
wherein the rail tracks (11) and the load receiving means (1-5) for receiving and depositing the stored goods (8) are arranged so that whilst the track-bound vehicle is located between the shelf lines at one shelf level, the load receiving means always project at least partially from an outer edge of the track-bound vehicle facing the stored goods (8), and are arranged underneath a surface clamped by one underside of the stored goods (8), which are located at the same shelf level as the track-bound vehicle, wherein the load receiving means (1-5) have at least one transfer unit (1, 2) which always projects at least partially from the outer edge of the track-bound vehicle facing the stored goods (8), **characterised in that** at least one of the transfer units (1, 2) is swivelled about an axis (6) running parallel with the rail track (11) so that at least one partial surface of the transfer unit (1, 2) can be transferred to a position which has at least one point which lies above the surface clamped by the underside of the stored goods (8), wherein at least one of the transfer units (1, 2) is effectively connected to a drive belt (4, 5) so that the drive belt (4, 5) is arranged at least partially underneath the rail track on which the track-bound vehicle is located.

2. Storage and conveyor system according to Claim 1, **characterised in that** the load receiving means (1-5) have at least one belt drive which forms at least partially a conveyor platform and with which the storage goods (8) can be brought at least partially into contact.

3. Storage and conveyor system according to Claim 2, **characterised in that** at least one of the belt drives has a side facing the stored goods (8) , the surface of which side has a high coefficient of friction.

4. Storage and conveyor system according to any of Claims 1 to 3, **characterised in that** the load receiving means (1-5) are arranged between two axes which have wheels serving to provide the progressive motion of the track-bound vehicle.

5. Storage and conveyor system according to any of Claims 1 to 4, **characterised in that** the load receiving means (1-5) have at least two belt drives and at least one coupling element, and at least two of the belt drives can be effectively connected by means of at least one coupling element.

6. Storage and conveyor system according to Claim 5, **characterised in that** at least one of the coupling elements ha at least one shaft and at least one drive belt (4, 5).

7. Storage and conveyor system according to Claim 5 or 6, **characterised in that** the coupling element is effectively connected to a drive unit.

8. Storage and conveyor system according to any of Claims 1 to 7, **characterised in that** the load receiving means (1-5) have two transfer units (1, 2) arranged on both sides of the track-bound vehicle, and a conveyor unit (3) arranged between the axles of the rail-bound vehicle, each of which is provided with a belt drive that can be brought partially into contact with the storage goods, and **in that** the belt drives are effectively connected to at least one common drive unit by at least one coupling element.

9. Storage and conveyor system according to any of Claims 1 to 8, **characterised in that** the track-bound vehicles can be supplied with electricity via the rail tracks (11).

## Revendications

1. Système de stockage et de transport comprenant
- n'importe quel nombre de lignes de rayonnages pour la prise de marchandise stockée (8) dans plusieurs plans de rayonnages,
- une multitude de voies à rails (11) qui sont disposées à hauteur des plans de rayonnage distincts entre les lignes de rayonnages,
- plusieurs véhicules sur rails équipés de moyens de prise de charges (1-5) pour prendre et déposer la marchandise stockée (8) ainsi que d'un train de roulement à propulsion ; et
- des moyens permettant le transfert des véhicules entre les plans de rayonnage, les voies à rails (11) et les moyens de prise de charges (1-5) servant à prendre et déposer la marchandise stockée (8) étant disposés de manière à ce que, pendant que le véhicule sur rails se trouve entre les lignes de rayonnages dans un plan de rayonnages, les moyens de prise de charges (1-5) soient du moins partiellement constamment proéminents d'un bord extérieur du véhicule sur rails tourné vers la marchandise stockée (8) et soient disposés en dessous d'une surface circonscrite par un côté inférieur de la marchandise stockée (8), qui se trouve dans le même plan de rayonnages que le véhicule sur rails,
les moyens de prise de charges (1-5) présentant au moins une unité de récupération (1, 2) qui est du moins partiellement constamment proéminente d'un bord extérieur du véhicule sur rails tourné vers la marchandise stockée (8),
**caractérisé en ce que** l'au moins une unité de récupération (1, 2) s'appuie en rotation ou en pivotement autour d'un axe (6) s'étendant parallèlement à la voie sur rails (11) de manière à ce qu'au moins une surface partielle de l'unité de récupération (1, 2) puisse être passée dans une position présentant au moins un point qui se situe au dessus de la surface circonscrite par un côté inférieur de la marchandise stockée (8), l'au moins une unité de récupération (1, 2) étant en liaison fonctionnelle avec une courroie de transmission (4, 5) de manière à ce que la courroie de transmission (4, 5) soit disposée du moins partiellement en dessous de la voie à rails sur laquelle se trouve le véhicule sur rails.

2. Système de stockage et de transport selon la revendication 1,
**caractérisé en ce que** les moyens de prise de charges (1-5) comportent au moins une transmission à courroie qui constitue du moins partiellement une plate-forme de transport et peut être mise en contact du moins partiellement avec la marchandise stockée (8).

3. Système de stockage et de transport selon la revendication 2,
**caractérisé en ce que** l'au moins une transmission à courroie comporte un côté tourné vers la marchandise stockée (8) et dont la surface présente une valeur de frottement élevée.

4. Système de stockage et de transport selon une des revendications 1 à 3,
**caractérisé en ce que** les moyens de prise de charge (1-5) sont disposés entre deux essieux qui comportent des roues servant à assurer le mouvement d'avance du véhicule sur rails.

5. Système de stockage et de transport selon une des revendications 1 à 4,
**caractérisé en ce que** les moyens de prise de charge (1-5) comportent au moins deux transmissions à courroie ainsi qu'au moins un élément de couplage et que les au moins deux transmissions à courroie peuvent être mises en liaison fonctionnelle par l'au moins un élément de couplage.

6. Système de stockage et de transport selon la revendication 5,
**caractérisé en ce que** l'au moins un élément de couplage comporte au moins un arbre et au moins une courroie de transmission (4, 5).

7. Système de stockage et de transport selon la revendication 5 ou 6,
**caractérisé en ce que** l'élément de couplage est en liaison fonctionnelle avec une unité de propulsion.

8. Système de stockage et de transport selon une des revendications 1 à 7,
**caractérisé en ce que** les moyens de prise de charge (1-5) comportent deux unités de récupération (1, 2) disposées des deux côtés du véhicule sur rails ainsi qu'une unité de transport (3) disposée entre les essieux du véhicule sur rails, qui disposent respectivement d'au moins une transmission à courroie pouvant être mise du moins partiellement en contact avec la marchandise stockée et que les transmissions à courroie sont en liaison fonctionnelle par au moins un élément de couplage avec au moins une unité de propulsion commune.

9. Système de stockage et de transport selon une des revendications 1 à 8,
**caractérisé en ce que** les véhicules sur rails peuvent être alimentés en énergie électrique par les voies à rails (11).
